# EUROPEAN PATENT APPLICATION

(11) **EP 2 023 121 A1**
(43) Date of publication of application: **11.02.2009**
(21) Application number: 07252728.6
(22) Date of filing: 06.07.2007
(51) Int. Cl.: G01N 21/03, B01L 3/00

(54) **Optical cell**

(71) Applicant: BP OIL INTERNATIONAL LIMITED, Sunbury-on-Thames, Middlesex TW16 7BP (GB)
(72) Inventor: The designation of the inventor has not yet been filed
(74) Representative: De Kezel, Eric

(57) **Abstract**

A wafer comprising an array of channels (8), which wafer (8) can be divided to produce a plurality of optical cells (4) each having a channel, the channel providing an opening into which a sample fluid can be fed, which optical cells (4) are suitable for use in optical analysis employing one or more wavelengths of electromagnetic radiation, and which comprise a material that at least partially transparent to the electromagnetic radiation employed in the optical analysis, which channels are disposed within each cell such that a sample fluid can be fed therein, and can be irradiated with electromagnetic radiation directed through the at least partially transparent material.

## Description

This invention relates to small-scale optical cells, and a process for their manufacture.

Small-scale devices used in chemical analysis are becoming increasingly important, particularly in the area of portable hand-held devices that can be used outside a laboratory environment, for example for analysing samples from road, rail or ship tankers, and from pipelines and land-based storage tanks.

An example of a small-scale optical analysis cell is described in EP-A-0 266 769, which described a cell with a 3mm optical path-length comprising Z-shaped channels formed within a metallic body.

However, a problem with small-scale portable devices is that complex fabrication techniques are often required in order to make the key components of a sufficiently small size. Another problem is that the production of small-scale components can often suffer from low quality consistency as well as high cost.

In the manufacture of portable optical analysis devices, involving the measurement of the absorption and/or reflectance characteristics of a sample exposed to one or more frequencies of electromagnetic radiation, the optical analysis cell which holds the sample is an important component. It must be made from a material that is sufficiently transparent to the electromagnetic radiation being used. Furthermore, in the case of replaceable optical analysis cells, the path-length for the optical measurements must be consistent to minimise any analytical errors.

Therefore, there remains a need to produce a plurality of optical cells to a high degree of consistency. Furthermore, there is a need to provide a more efficient method of producing such cells that is simpler, and more cost and material-efficient.

According to the present invention, there is provided a wafer comprising an array of channels, from which wafer a plurality of optical cells can be produced, each having a channel with an opening into which a sample fluid can be fed, which optical cells are suitable for use in optical analysis employing one or more wavelengths of electromagnetic radiation, and which comprise a material that is at least partially transparent to the electromagnetic radiation employed in the optical analysis, which channels are disposed within each cell such that a sample fluid can be fed therein, and can be irradiated with electromagnetic radiation directed through the at least partially transparent material.

The present invention provides a single wafer which can be cut to form a plurality of optical cells suitable for use in optical analysis employing one or more frequencies of electromagnetic radiation (EMR). The wafer comprises an array of channels, typically of the same shape and size as each other. The channels are arranged such that, after the wafer is cut, the resulting optical cells each comprise a channel with an opening into which a sample to be analysed can be fed. The wafer comprises material that is at least partially transparent to the EMR radiation to be used in the optical analysis. The channel within each cell is arranged such that EMR directed through the EMR-transparent material can irradiate a sample within the channel. Preferably, each cell has two channel openings, to allow a sample fluid to flow through the cell. This reduces the chance of bubble formation, and also enables analysis on a continuous flow of sample to be obtained.

The channels for each optical cell can, before being cut from the wafer, be interconnected with a channel from the neighbouring optical cell. Alternatively, the channels for each optical cell can be independent channels that do not intersect with each other.

By producing a wafer in accordance with the present invention, a plurality of optical cells can be readily produced in a single initial fabrication step, followed by a simple cutting procedure. This improves consistency between the cells, for example in optical path-length and absorbance characteristics of the wafer materials, as all cells are made from the same wafer, which minimised differences that may arise between batches of different wafer materials. In one embodiment, the shapes and/or dimensions of the channels in the array can be different, so that a number of different optical cells can be fabricated from the wafer, for example where they are to be used for different apparatus. Alternatively, the channel shapes and dimensions can be the same, to provide a number of optical cells of the same type and of high consistency. It is possible for each wafer to provide a large quantity of optical cells, typically 10 or more.

In one embodiment, the wafer is made up of a plurality of layers that are preferably capable of being bonded strongly and efficiently together, and which are resistant to separating as a result of contact with samples or through thermally-induced expansion or contraction.

Three layers can be used, in which two outer layers sandwich an inner layer, the inner layer comprising the plurality of channels. At least one of the outer layers is at least partially transparent to the one or more wavelengths of electromagnetic radiation (EMR) to be used in the optical analysis. One of the outer layers can be reflective, such that radiation transmitted through a sample in the channel is reflected back through the sample. This can be achieved, for example, by using a metallic foil or coating of aluminium or gold, for example. Alternatively, reflection can be achieved by directing incident EMR to the cell through one of the outer cell layers at a non-perpendicular angle, such that at least some of the EMR reflects from the surface of the other outer layer and back through the sample.

The wafer and optical cells can be adapted to be suitable for any EMR wavelengths, for example near infrared (NIR), encompassing frequencies of 4000 cm⁻¹ to 10000 cm⁻¹, mid infrared (MIR) encompassing frequencies of 4000 cm⁻¹ to 180 cm⁻¹, or UV/Visible wavelengths which encompass wavelengths of the range 200 to 800nm. Which analyses are possible will be determined, in part, on the nature of the sample fluid to be analysed, and on the nature of the wafer materials.

Lithographic techniques such as chemical or laser lithography, can be used to produce the channels in the wafer. Bonding techniques such as anodic bonding or use of adhesive can be used for bonding wafer layers together. Which techniques are used will depend, inter alia, on the nature of the wafer materials.

In a preferred embodiment, the wafer comprises a layer of silicon which can be readily cut or etched to a high degree of accuracy using lithographic techniques. Silicon wafers can also be prepared to a high degree of purity and thickness, which is advantageous over polymeric materials, for example, which may be difficult and expensive to produce with the desired level of consistency.

An NIR-transparent material that is suitable for use with silicon in an NIR cell is silicate-based glass, such as quartz or borosilicate glass, e.g. Pyrex^{™}. Silica-based materials, such as borosilicate glass or quartz, can be anodically bonded to silicon to provides strong adhesion between the layers. They are also resistant to degradation or fracture during thermally induced expansion or contraction, which is further enhanced by the low and similar thermal expansion coefficients of the two materials.

Conventional cutting methods can be employed to divide the wafer into the plurality of optical cells. Optical cells made from borosilicate glass and silicon can be used in devices for NIR measurements of hydrocarbon samples, for example, and hence can find applications for analysis of samples from a variety of hydrocarbon-related industries, notably in the extraction, distribution and refining of crude oil. For example, a portable hand-held device can be used at oil rigs or oil wells, for samples extracted from an oil pipeline or from the tank of a crude oil sea-tanker. It can also be used to analyse samples at an oil refinery, such as samples extracted from crude oil storage tanks, from one or more refinery units, or from fuel tanks or road and rail distribution tankers.

In summary, the present invention provides a low cost method of producing a large number of optical cells that are highly consistent in terms of material quality and in terms of cell dimensions, particularly with regard to optical path-length. As a large number of optical cells can be produced simultaneously and at relatively low cost, then the optical cells can be conveniently disposed of after use, which avoids the need for washing cells between measurements and consequently avoids any risk of contaminating any subsequently analysed samples.

There now follows a non-limiting example illustrating the invention, with reference to the Figures in which;
Figure 1 is a top view of a wafer with a plurality of channels before being cut into a plurality of optical cells, one of which is shown in the inset.
Figure 2 shows a side view of an optical cell cut from the wafer of Figure 1.
Figure 3 is a top view of a wafer with a different channel structure to the cell shown in Figure 1, an optical cell from which is shown in the inset.
Figure 4 shows a side-view of an optical cell cut from the wafer of Figure 3.
Figure 5 is an overhead view of a small-scale analysis device incorporating an optical cell shown in Figure 4.
Figure 6 is a view from underneath the small-scale analysis device of Figure 5.
Figure 7 illustrates the path of near infrared (NIR) radiation through an optical cell made from a wafer having two outer layers of Pyrex^{™} (borosilicate glass) and an inner layer of silicon.

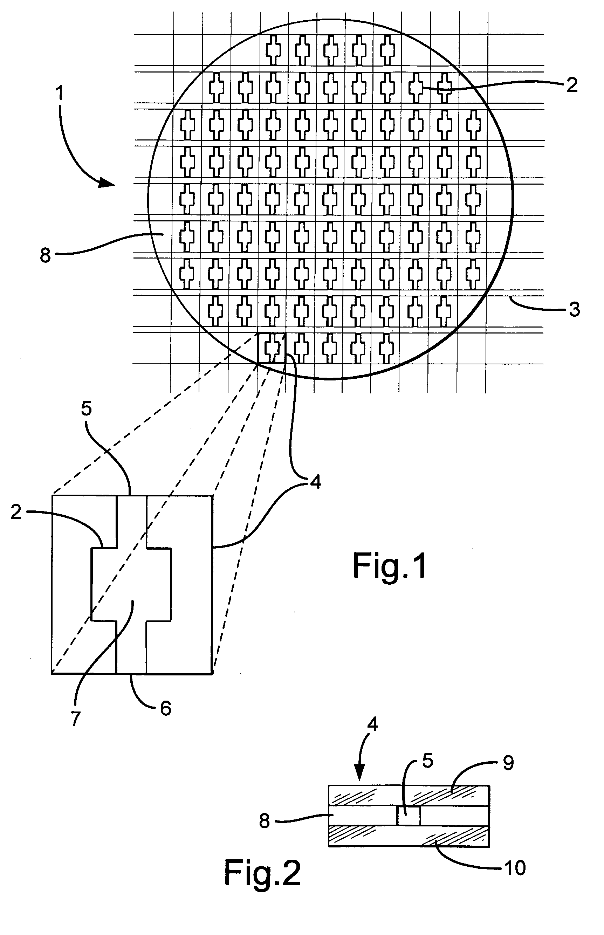

Figure 1 shows a top view of a wafer 1 with a plurality of channels 2, in which all the channels are of the same shape and size. The grid 3 indicates the cutting lines from which the optical cells 4 are produced. The inset shows an individual optical cell, in which the channel 2 has two open ends 5 and 6 through which a fluid can pass. The central portion 7 of the channel has a higher cross-sectional area than the channel openings 5 and 6, which increases the quantity of material that can enter the channels in order to increase the quantity of material exposed to the EMR. In this example, the optical cell dimensions are 11mm by 5mm wide, the channel diameter at the two openings is 0.5mm, and the width of the central portion 7 is 1.5mm. The material of the wafer layer having the channels 8 is silicon, and the wafer also comprises two outer layers (not shown) of Pyrex^{™} borosilicate glass. Each layer has a thickness of 0.5mm, giving a total wafer thickness of 1.5mm.

Figure 2 shows a side view of an optical cell 4 produced from the wafer of Figure 1. Three layers are shown, in which the central silicon layer 8 is sandwiched between two outer layers 9 and 10 of the borosilicate glass, showing the open end 5 of channel 2.

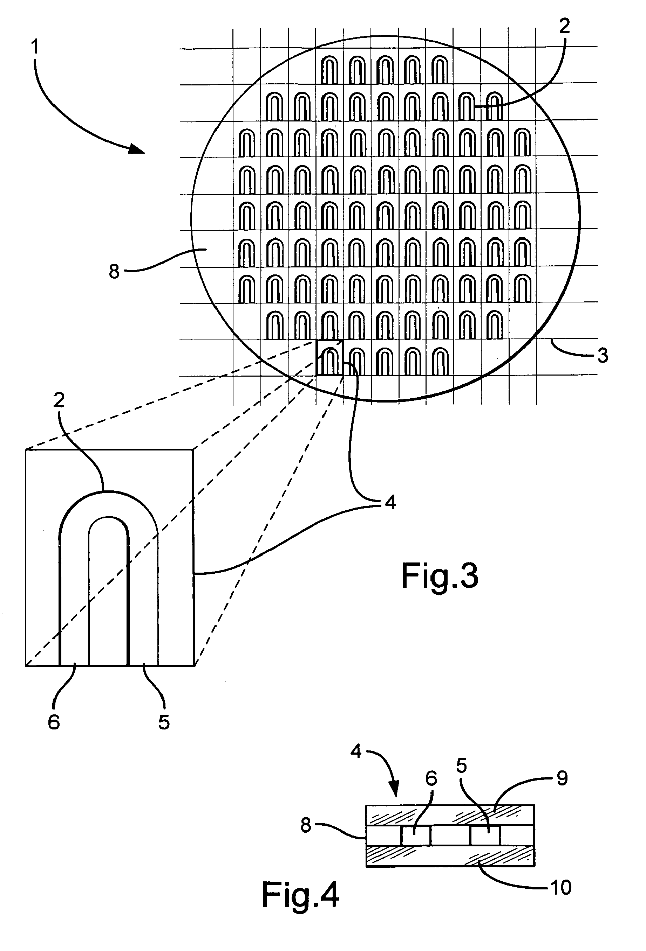

Figure 3 shows a wafer produced in the same way and from the same materials as the wafer of Figure 1. However, in this example, the channels 2 in the silicon layer 8 of the wafer 1 are U-shaped. When cut according to the grid-lines 3, optical cells 4 with U-shaped channels result.

Figure 4 shows that the two openings 5 and 6 of the channel 2 both open on the same edge of the optical cell. In this example, the channel 2 is of uniform cross-sectional area throughout, with a width of 2mm. The cell thickness is also 1.5mm, and is 10mm by 12mm wide.

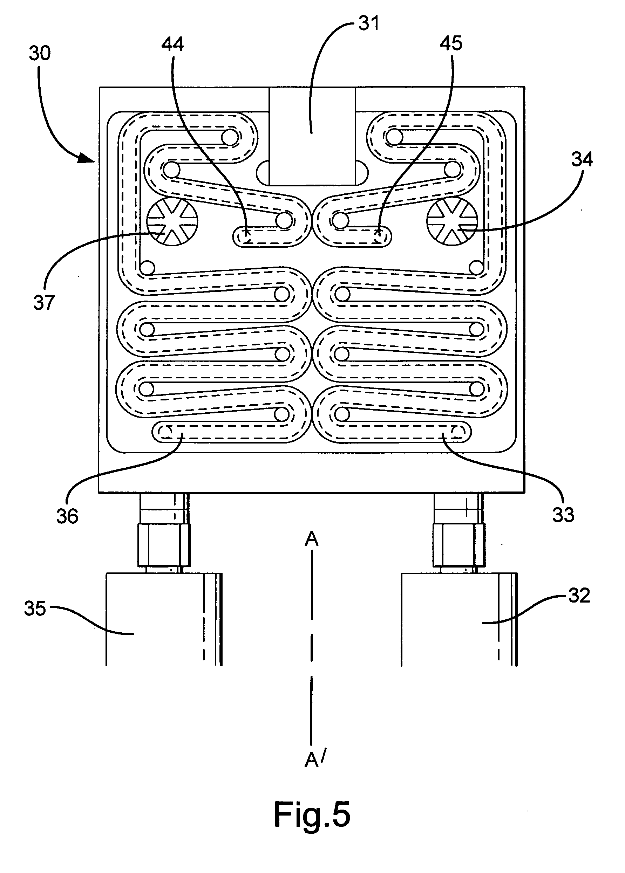

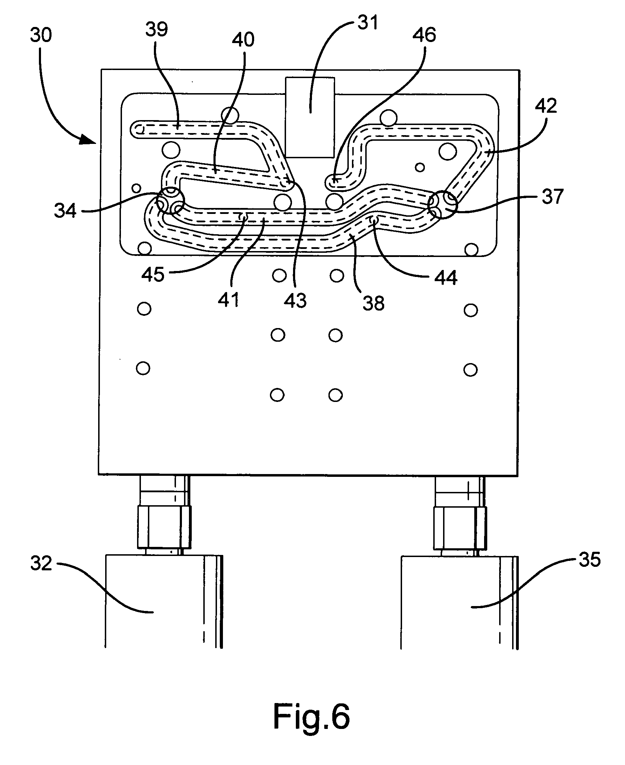

Figure 5 shows an overhead view of a polymeric, disposable sample analysis plate 30 into which an integrated optical cell (not shown), having a U-shaped channel as shown in Figure 3, can be inserted into recess 31. A sample fluid, for example crude oil, from a sample reservoir is transferred through an inlet conduit 35, into a microfluidic channel 36, and through an opening 44 that leads into microfluidic channel 38 (shown in Figure 6). A solvent, for example toluene, can also be fed into the sample plate through inlet conduit 32, into microfluidic channel 33, which leads into microfluidic channel 41 (shown in Figure 6) through an opening 45.

Figure 6, which llustrates a view of the same sample plate 30 shown in Figure 5 after a 180° rotation around axis A-A', illustrates the different paths that the solvent or sample take when reaching microfluidic channels 38 and 41 respectively. The position of the microvalves 34 and 37 determines the paths that the solvent and sample can take.

Microfluidic channel 38 connects the two microvalves, and provides a path for sample to be transferred directly to microfluidic channel 39, which leads to a waste collection reservoir (not shown), without passing through the optical cell (not shown) in recess 31. Solvent can also be directed from microvalve 34 into microfluidic channel 39 and to the waste reservoir, without passing through the cell.

In a different position, microvalve 34 allows sample fluid to be directed to microvalve 37 through microfluidic channel 38, microvalve 37 being adapted to direct sample fluid through microfluidic channel 42 and into the optical cell which connects to channel 42 at intersection 46. Sample fluid leaving the optical cell is directed into channel 39 at intersection point 43 when microvalve 34 is closed to channel 40, and when microchannel 40 is filled with sample fluid or solvent.

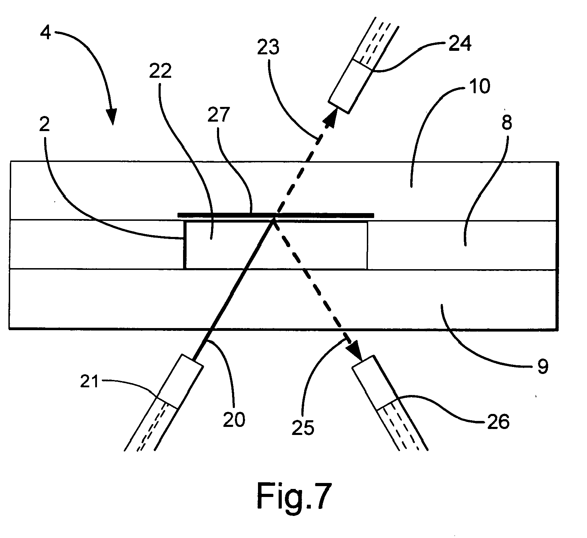

Figure 7 shows how an optical cell can be used in order to collect absorbance data in transmission mode or in reflectance mode. EMR, in this case NIR radiation 20, is emitted from a source 21, and is optionally directed to the optical cell through optical fibres. The NIR passes through the first NIR-transparent Pyrex^{™} layer 9, and through a fluid sample 22 in channel 2. Radiation 23 passing through the second NIR-transparent Pyrex^{™} layer 10 can be collected by detector 24, optionally being directed thereto through optical fibres. Alternatively, the cell can be adapted with a gold-mirrored coating 27 on one surface of the Pyrex^{™} layer 10. Radiation reflected from the mirrored surface 25 passes back through the sample, through the first NIR-transparent Pyrex^{™} layer, and collected by detector 26, optionally being directed from the optical cell to the detector through optical fibres.

Commercially available silicon wafers that can be used in producing optical cells according to the present invention can be produced in varying sizes. One suitable form is a circular wafer having a diameter of about 10 cm. For the larger of the two optical cells described in these examples, this allows about 80 optical cells to be produced from a single silicon disc, thus providing a cost effective way of producing numerous optical cells of consistent size and quality that are suitable for use in small-scale analytical equipment.

## Claims

1. A wafer comprising an array of channels, which wafer can be divided into a plurality of optical cells each having a channel, the channel providing an opening into which a sample fluid can be fed, which optical cells are suitable for use in optical analysis employing one or more wavelengths of electromagnetic radiation, and which comprise, at least in part, a material that is at least partially transparent to the electromagnetic radiation employed in the optical analysis, which channels are disposed within each cell such that a sample fluid can be fed therein, and can be irradiated with electromagnetic radiation directed through the at least partially transparent material.

2. A wafer as claimed in claim 1, in which the one or more wavelengths of electromagnetic radiation are near infrared radiation.

3. A wafer as claimed in claim 1 or claim 2 comprising a plurality of layers.

4. A wafer as claimed in any one of claims 1 to 3, in which the wafer, or at least one layer thereof, is silicon.

5. A wafer as claimed in claim 4, in which there is a silicon layer, and a layer of borosilicate glass.

6. A wafer as claimed in claim 5, in which there is a silicon layer sandwiched between two layers of borosilicate glass.

7. A wafer as claimed in claim 5 or claim 6, in which the channels are in the silicon layer.

8. A wafer as claimed in any one of claims 1 to 7, in which all the channels in the array are of the same shape and size.

9. A wafer as claimed in any one of claims 1 to 8, in which each optical cell comprises a channel with two openings.

10. A wafer as claimed in any one of claims 1 to 9, from which 10 or more optical cells can be produced.

11. An optical cell produced form a wafer as claimed in any one of claims 1 to 10.

12. An optical cell as claimed in claim 11, in which there are two openings to the channel.

13. An optical analysis device comprising an optical cell as claimed in claim 11 or claim 12.

14. A method of producing a wafer as claimed in any one of claims 1 to 10, comprising producing a plurality of channels in a wafer, which wafer comprises a material that is at least partially transparent to the one or more wavelengths of electromagnetic radiation to be used in the optical analysis.

15. A method as claimed in claim 14, in which the wafer comprises a plurality of layers, the channels are produced in one of the layers, and the layers are bonded together to form the wafer.

16. A method as claimed in claim 15, in which the wafer comprises a layer of silicon and two layers of borosilicate glass, the channels being produced in the silicon layer.

17. A method as claimed in claim 16, in which the borosilicate glass layer(s) is bonded to the silicon by anodic bonding.

18. A method as claimed in claim 16 or claim 17, in which lithography is used to create the channels.

19. A method of preparing an optical cell as claimed in claim 11 or claim 12, comprising cutting a wafer as claimed in any one of claims 1 to 10 into a plurality of individual optical cells, such that each optical cell comprises a channel with at least one opening.

20. A method as claimed in claim 19, comprising the production of a wafer according to any one of claims 14 to 18.
